# EUROPEAN PATENT APPLICATION

(11) **EP 1 675 317 A1**
(43) Date of publication of application: **28.06.2006**
(21) Application number: 04425947.1
(22) Date of filing: 23.12.2004
(51) Int. Cl.: H04L 12/56

(54) **Method and system for controlling compressed mode deactivation in a communication network, related communication network and computer program product therefore**

(71) Applicant: Siemens S.p.A., 20126 Milano (IT)
(72) Inventor: Zirilli, Bruno, 20162 Milano (IT)
(74) Representative: Giustini, Delio

(57) **Abstract**

Deactivating a compressed mode of operation in a communication network includes a NBAP message exchange process (60) between a NodeB and a Radio Network Controller and an RNSAP message exchange process (70) between Radio Network Controllers included in the network. Acknowledgement (90) of the NBAP (60) messages and acknowledgement (95) of the RNSAP (70) messages, exchanged during the said message exchange process is provided. Typically, the network is a Third Generation (3G) mobile communication network configured wherein the compressed mode is activated as a result of a User Equipment (10) being in the process of switching from Third Generation (3G) to Second Generation radio Transmission/Reception and/or for monitoring the inter-frequency radio environment in a cellular network in the process of seamless switching to inter-frequency Third Generation (3G) cells.

## Description

### Field of the invention

The invention relates to communication networks.

The invention was developed by paying specific attention to the possible application in Third Generation (3G) mobile telecommunication networks such as e.g. UMTS mobile networks.

### Description of the related art

Third Communication networks based on e.g. the Universal Mobile Telecommunications System (UMTS) are configured in order to ensure "seamless" switching of connections toward the Global System for Mobile Communications (GSM).

Due e.g. to coverage issues, certain areas well served by a GSM network may not be reached by the Third Generation (3G) cells. In such an exemplary context, a User Equipment (UE) that happens to move out of the Third Generation service (i.e. radio coverage) area can switch its radio communication towards e.g. a GSM viz. a second generation (2G) radio environment while retaining the ongoing connection.

The related switching procedure needs a preliminary step in which the User Equipment explores the 2G radio environment for obtaining the information required in order to ensure continued operation.

Depending on device capability, there may be periods of time where the User Equipment discontinues the Third Generation Transmission/Reception with the purpose of searching all Second Generation information. This operation is handled by the UMTS Terrestrial Radio Access Network with a well defined mode of operation called "Compressed Mode".

A detailed description of "Compressed mode" operation is provided e.g. in the 3GPP Documents TS 25.101, TS 25.133, TS 25.214, TS 25.215.

The activation (i.e. setting-up)/deactivation of "Compressed Mode" must be properly managed in order to guarantee seamless switching and accurate synchronization between the User Equipment and the UMTS Terrestrial Radio Access Network; for this reason, the Third Generation Partnership Project (3GPP) has provided well defined actions to be executed.

The same method is used for seamless switching to inter-frequency UMTS cells; in that case the Compressed Mode is activated in order to monitor the inter-frequency UMTS radio environment.

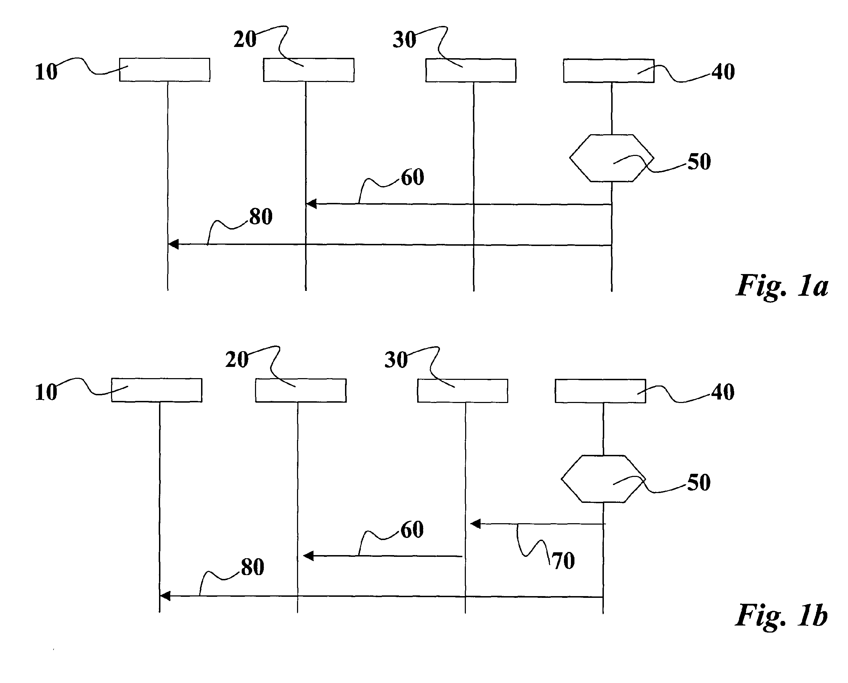

While the underlying concepts are well known to those of skill in the art (see e.g. the 3GPP document TS 25.433) the "Compressed Mode" deactivation procedure, as performed by means of a "Compressed Mode Command", will now be briefly described by referring to the message-flow diagram shown in Figures 1a and 1b.

This message-flow diagram shows an exemplary exchange of messages within the UMTS Terrestrial Radio Access Network (UTRAN) and, more specifically, between the UTRAN and a User Equipment (UE).

It will be assumed that at the beginning of the procedure both the UMTS Terrestrial Radio Access Network (UTRAN) and the User Equipment (UE) operate in the Compressed Mode, i.e. with the Compressed Mode activated.

Specifically, in Figure 1 reference number 10 designates a User Equipment, reference number 20 designates a NodeB, reference number 30 designates a Drift Radio Network Controller (DRNC), while reference number 40 designates a Serving Radio Network Controller (SRNC).

When the Compressed Mode is to be deactivated, the Serving Radio Network Controller 40 sends out an appropriate set of messages. The deactivate Compressed Mode decision, designated 50 in Figure 1, is followed by the step of sending messages within UTRAN and between UTRAN and UE, depending on the UTRAN configuration and the connection path between the SRNC and the UE.

Figure 1a shows the case of a UE connected to the SRNC via a NodeB (Iub interface only).

In this situation, the Compressed Mode deactivation procedure consists of:
- a NBAP COMPRESSED MODE COMMAND 60 from the Serving Radio Network Controller 40 to the NodeB 20; and
- a RRC MEASUREMENT_CONTROL message 80 from the Serving Radio Network Controller 40 to the User Equipment 10.

Figure 1b shows the case of UE connected to the SRNC via the NodeB and the DRNC (Iub and Iur interfaces).

In this situation the Compressed Mode deactivation procedure consists of:
- a RNSAP COMPRESSED MODE COMMAND 70 from the Serving Radio Network Controller 40 to the Drift Radio Network Controller 30; and
- a NBAP COMPRESSED MODE COMMAND 60 from the Drift Radio Network Controller 30 to the NodeB 20; and
- a RRC MEASUREMENT_CONTROL message 80 from the Serving Radio Network Controller 40 to the User Equipment 10.

The acronyms used throughout this description are well known to those of skill in the related art, thus making it unnecessary to provide herein a detailed description of the, meaning of any such acronym.

Each of the messages considered in the foregoing contains the Connection Frame Number (CFN) at which the Compressed Mode should be deactivated (the UMTS Terrestrial Radio Access Network and the User Equipment sides).

The RRC MEASUREMENT_CONTROL message is acknowledged by the User Equipment at the Radio Link Control (RLC) level. The acknowledgement mechanism includes the possibility of repeating the message (the Radio Link Control acknowledge) in case of lacks.

For the NBAP COMPRESSED MODE COMMAND 60, and the RNSAP COMPRESSED MODE COMMAND 70 no kind of acknowledgement is provided.

This means that any of these messages could go lost, thus leading to synchronization faults between the UMTS Terrestrial Radio Access Network and the User Equipment.

### Object and summary of the invention

In view of the foregoing, the need is felt of an arrangement wherein the messages generated during the Compressed Mode deactivation phase can be acknowledged, thus dispensing with the risk that these messages may be lost.

The object of present invention is to provide an arrangement that satisfactorily meets that need.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the invention thus improves the message exchange process in e.g. a UMTS network by an acknowledgement phase in the Compressed Mode deactivation between:
- a NodeB and a Radio Network Controller, the Drift Radio Network Controller or the Serving Radio Network Controller (NBAP COMPRESSED MODE COMMAND),
- two Radio Network Controllers, one Drift Radio Network Controller and the other Serving Radio Network Controller (RNSAP COMPRESSED MODE COMMAND).

### Brief description of the annexed drawings

The invention will now be described, by way of example only, with reference to the enclosed figures of drawing, wherein:
- Figures 1a and 1b, related to the prior art, has been described in the foregoing;
- Figure 2, including two portions designated 2a and 2b, respectively, is a message flow diagram for a Compressed Mode Deactivation procedure as described herein;
- Figures 3 to 5 are flow-charts representative of the steps involved in procedures designated CM_COMMAND REPETITION, PHYSICAL CHANNEL RECONFIGURATION, as better detailed in the following;
- Figures 6a, 6b, and 6c show handling of expiration of a procedure designated CM_COMMAND_TIMER handling in three different instances; and
- Figure 7 shows a typical application scenario of the arrangement described herein.

### Detailed description of preferred embodiments of the invention

The focus of the exemplary arrangement described herein is on the "Compressed Mode" deactivation procedure as used e.g. within the UMTS Terrestrial Radio Access Net.

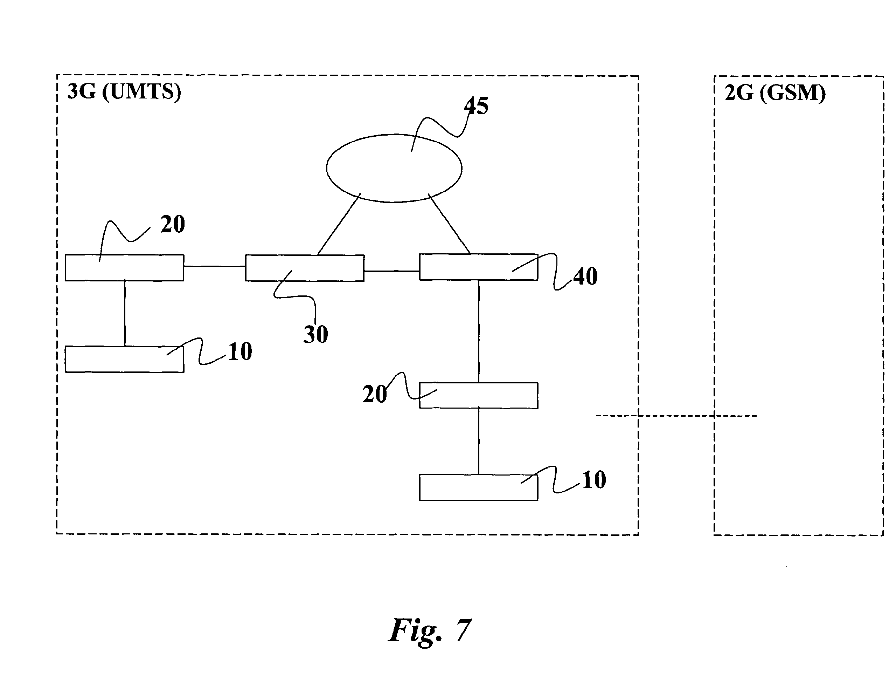

Just by way of reference, the block diagram of Figure 7 represents the main entities included in the typical architecture of a 3G mobile communication system such as e.g. a UMTS mobile system.

These entities include:
- the Core Network 45,
- the Radio Network Controllers
- Drift Radio Network Controllers 30
- Serving Radio Network Controllers 40,
- the NodeBs 20 and
- the UEs 10.

Typically, one Radio Network Controller operates as a Radio Network Controller or as a Drift Radio Network Controller depending on the connection path of a specific UE to the Core Network.

Throughout this description, it will be assumed that the reader is cognizant of the basic principles underlying the structure and operation of 3G mobile communication networks, thus making it unnecessary to disclose these principles again. For a proper understanding of the detailed description of an exemplary embodiment of the invention as described herein, it will suffice to recall that the exemplary arrangement described herein provides a method for NBAP-RNSAP messaging including an acknowledgement phase in the Compressed Mode deactivation procedure.

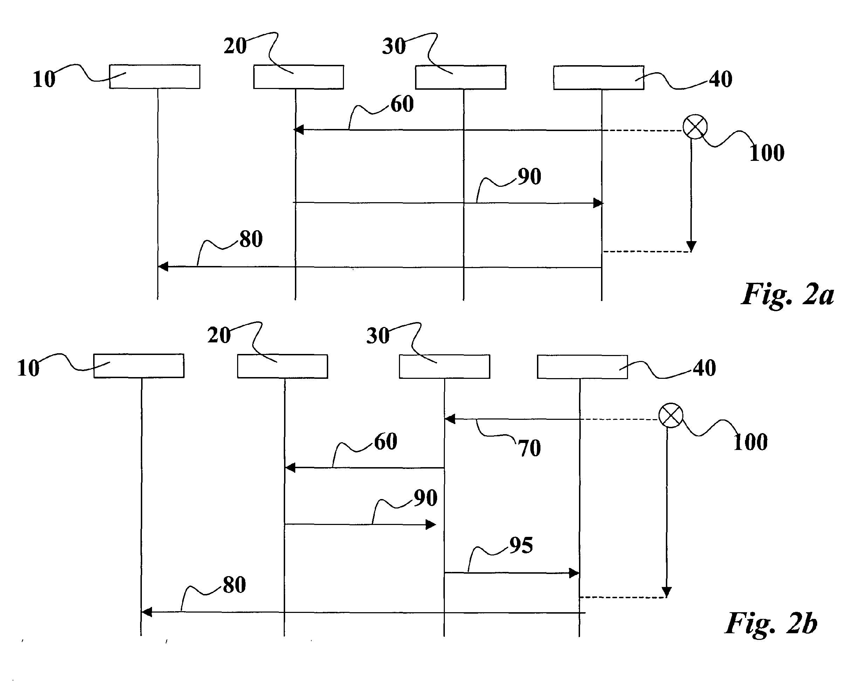

Figure 2 (where the same reference numerals were used to indicate the same elements/functions already described in connection with Figure 1) shows a message flow diagram for the Compressed Mode Deactivation procedure "NBAP COMPRESSED MODE COMMAND" (Figure 2a) and "RNSAP COMPRESSED MODE COMMAND" (Figure 2b).

Specifically, a "successful" case is considered in Figure 2.

For the correct acknowledgement of NBAP (RNSAP) COMPRESSED MODE COMMAND, the Information Element (IE) "Transaction ID" is used and a CM COMMAND TIMER, designated 100, is added into the Radio Network Controller. The CM COMMAND TIMER 100 is started by the Serving Radio Network Controller 40 together with the sending of the NBAP (RNSAP) COMPRESSED MODE COMMAND 60 (70).

A NBAP COMPRESSED MODE COMMAND successful acknowledge message 90 is sent by the NodeB 20 to the Serving Radio Network Controller 40 after the reception of the NBAP COMPRESSED MODE COMMAND 60; see Figure 2a.

When the Drift Radio Network Controller 30 is involved, the Serving Radio Network Controller 40 sends RNSAP COMPRESSED MODE COMMAND 70 to the Drift Radio Network Controller 30 then the Drift Radio Network Controller 30 sends the NBAP COMPRESSED MODE COMMAND 60 to the NodeB 20.

Consequently, a NBAP COMPRESSED MODE COMMAND successful acknowledge message 90 is sent by the NodeB 20 to the Drift Radio Network Controller 30 and the Drift Radio Network Controller 30 sends the RNSAP COMPRESSED MODE COMMAND successful 95 to the Serving Radio Network Controller 40; see Figure 2b.

If the Serving Radio Network Controller 40 receives this acknowledgement before the expiration of the CM COMMAND TIMER 100, the deactivation procedure continues with the RRC MEASUREMENT_CONTROL message 80 from the Serving Radio Network Controller 40 to the User Equipment 10.

In case the CM COMMAND TIMER 100 expires before the arrival of the NBAP (RNSAP) COMPRESSED MODE COMMAND successful message 90 (95), the Radio Network Controller can manage the abnormal behaviour by means of repetitions of NBAP (RNSAP) COMPRESSED MODE COMMAND (with restarting of CM_COMMAND_TIMER) .

In this case the number of repetitions can be decided with a new Radio Network Controller configurable parameter: the N_REP_CM_COMMAND. After that, the CM_COMMAND_TIMER has expired for N_REP_CM_COMMAND consecutive times, and the next step is No Actions.

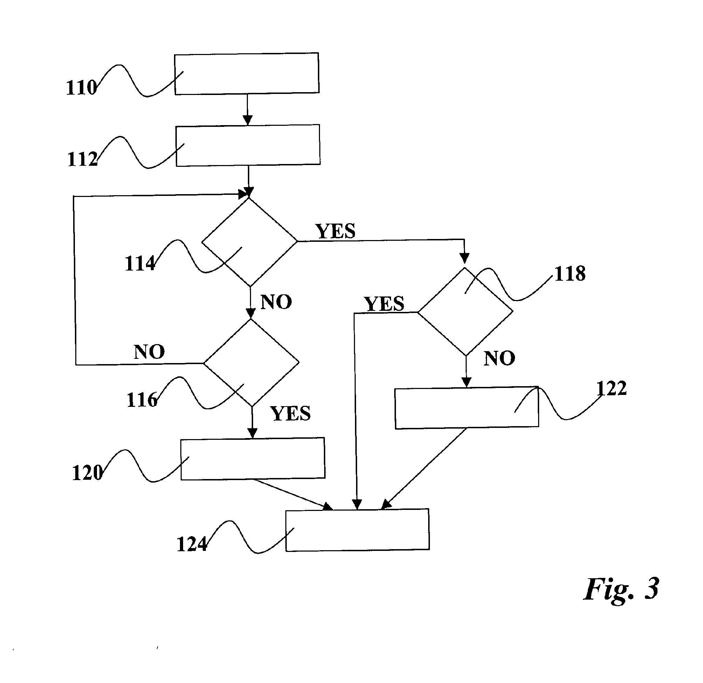

Figure 3 is a flow-chart wherein the steps of the CM_COMMAND REPETITION for successful acknowledge and abnormal handling are shown.

Specifically, in a step 110 the CM deactivation decision is taken.

In a step 112 a NBAP (or RNSAP) CM COMMAND 60 (70) is sent, the CM_COMMAND_TIMER 100 is reset and then started. A N_CM_COMMAND_SENT variable is reset. In a step 114 a check is made as to whether the CM_COMMAND_TIMER 100 is expired.

In the negative case, in a step 116 a check is made as to whether an ACK_MSG acknowledgement message has arrived: NBAP (or RNSAP) COMPRESSED MODE COMMAND successful 90 (95).

In the negative case, the procedure returns to step 114, otherwise, in the affirmative case, in a step 120 a RRC MEASUREMENT_CONTROL message 80 is sent to the User Equipment 10. A step 124 marks the end of the procedure.

In the affirmative case, the procedure continues with a step 118, wherein a check is made as to whether the value of N_CM_COMMAND_SENT reaches the value of N_REP_CM_COMMAND. In the negative case, in a step 122 the CM_COMMAND_TIMER 100 is reset and then started. The value of N_CM_COMMAND_SENT is increased by one. The procedure then returns to the step 114. In the affirmative case the procedure ends in a step 124.

A possible alternative is starting a different UTRAN procedure, for example a NBAP(RNSAP)RL_RECONFIGURATION/RRC PHYSICAL_CHANNEL_RECONFIGURATION procedure.

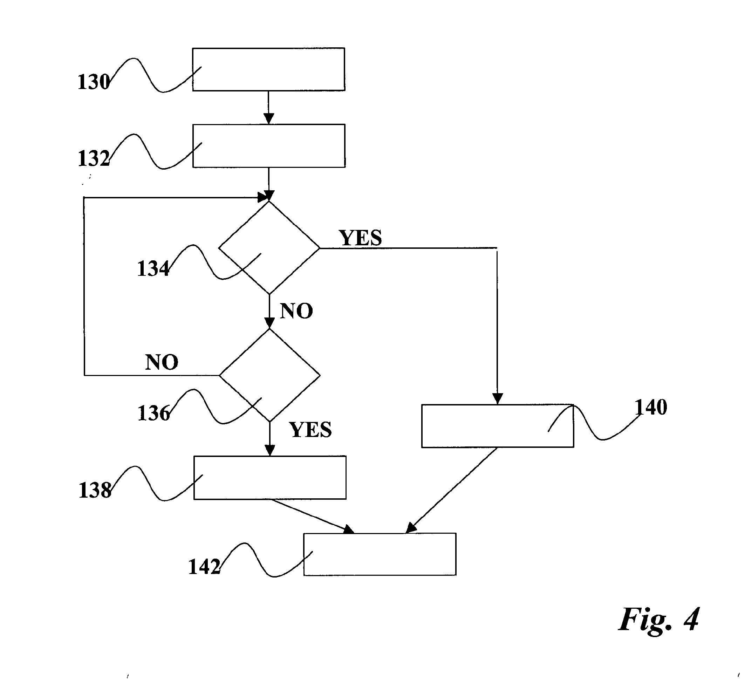

Figure 4 is a flow-chart wherein the steps of the NBAP(RNSAP)RL_RECONFIGURATION/RRC PHYSICAL_CHANNEL_RECONFIGURATION for successful acknowledge and abnormal handling are shown.

Specifically, in a step 130 the CM deactivation decision is taken. In a step 132, the NBAP (RNSAP) CM COMMAND 60 (70) is sent, and the CM_COMMAND_TIMER 100 is reset and then started. In a step 134 a check is made as to whether the CM_COMMAND_TIMER 100 is expired.

In the negative case, in a step 136 a check is made as to whether the ACK_MSG acknowledgment message has arrived: NBAP (or RNSAP) COMPRESSED MODE COMMAND successful 90 (95). In the negative case, the procedure returns to step 134. Otherwise, in the affirmative case, the RRC MEASUREMENT_CONTROL message 80 is sent to the User Equipment 10 in a step 138. Finally, in a step 142 the procedure ends.

In the case the test of the step 134 gives an affirmative result, the procedure continues with a step 140. In the step 140 a NBAP(RNSAP)RL_RECONFIGURATION/RRC PHYSICAL_CHANNEL_RECONFIGURATION module is called. Finally, the procedure ends in a step 142.

As further alternative, no operation is finally performed as both the UTRAN and the User Equipment remain in the Compressed Mode.

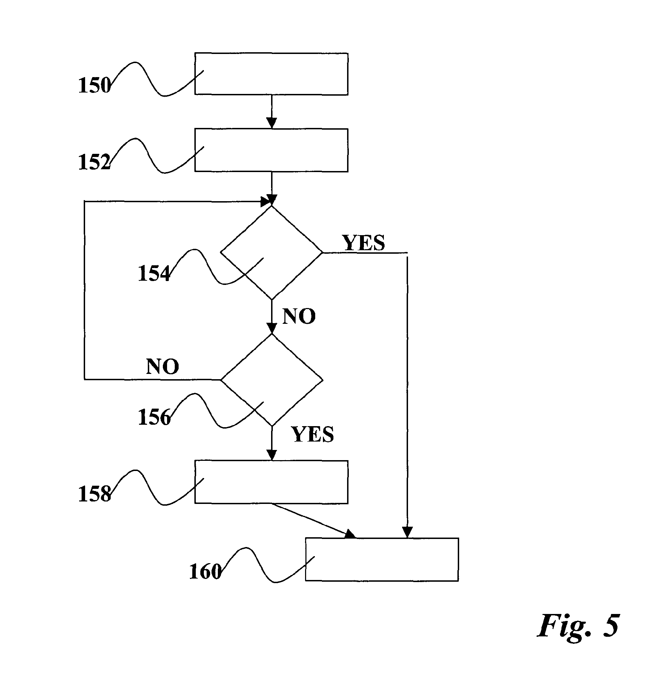

Figure 5 is a flow-chart showing the steps involved in the NO OPERATION mode for successful acknowledgement and abnormal handling.

Specifically, in a step 150 the CM deactivation decision is taken. In a step 152 the the NBAP (RNSAP) CM COMMAND 60 (70) is sent, and the CM_COMMAND_TIMER 100 is reset and then started. In a step 154 a check is made as to whether the CM_COMMAND_TIMER 100 has expired.

In the negative case, in a step 156 a check is made as to whether the ACK_MSG acknowledgement message has arrived: NBAP (or RNSAP) COMPRESSED MODE COMMAND successful 90 (95). In the negative case, the procedure returns to the step 154. Otherwise in the affirmative case, in a step 158 the RRC MEASUREMENT_CONTROL message 80 is sent to the User Equipment 10. Finally, in a step 160 the procedure ends.

In the case the step 154 yields an affirmative outcome, the procedure ends in a step 160.

It will be appreciated that the amount of signalling added by the solution shown in Figure 2 (with respect to the solution of the current state of the art) is quite small (only one new short NBAP (or RNSAP) acknowledge command).

The decision between the various alternatives considered in Figures 3, 4, and 5 is dictated by a parameter that is a Radio Network Controller configurable parameter designated CM_COMM_ABNORMAL_HANDLING.

Note that the related Radio Network Subsystem Application Part (RNSAP) procedure is a simple extension to the NodeB Application Part (NBAP) case with the addition of the "double" NBAP - RNSAP messaging (i.e. the Drift Radio Network Controller generates the NodeB Application Part message corresponding to the Radio Network Subsystem Application Part one and vice versa).

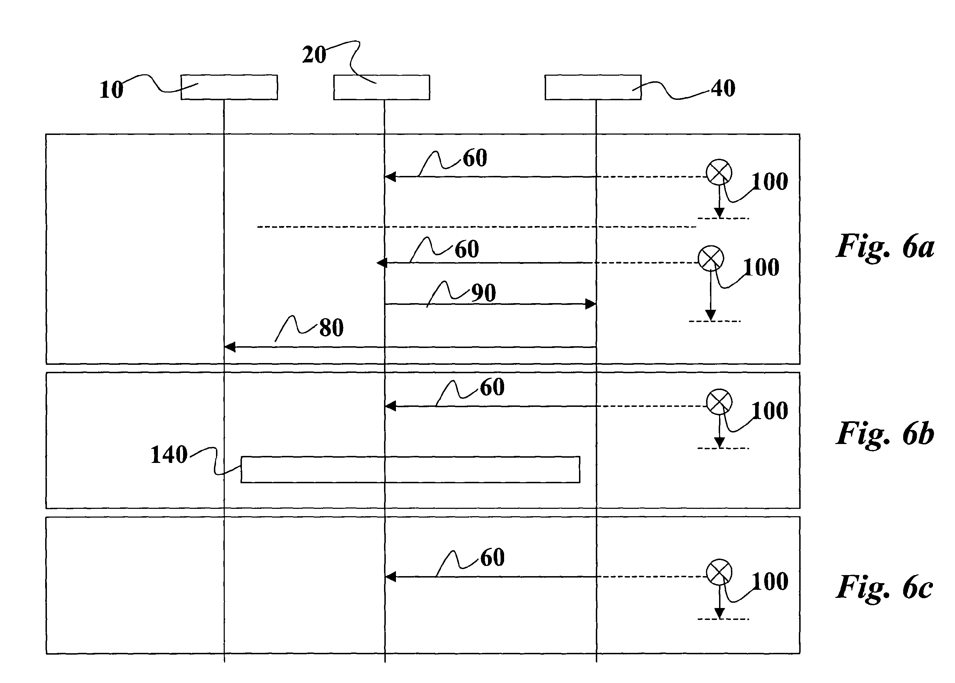

Figures 6a, 6b, and 6c show the CM_COMMAND_TIMER expiration handling message flows for NBAP CM COMMAND (60) in the cases described in the foregoing in connection with Figures 3, 4, and 5.

Figure 6a represents the message flow for the CM_COMM_ABNORMAL_HANDLING=REPETITION.

After the decision to deactivate COMPRESSED MODE, the Serving Radio Network Controller 40 sends the NBAP COMPRESSED MODE COMMAND 60 to the NodeB 20. At the same time, the Serving Radio Network Controller starts the CM_COMMAND_TIMER 100. At the expiry of such a timer, the Serving Radio Network Controller 40 sends another NBAP COMPRESSED MODE COMMAND 60 to the NodeB 20. This happens for a maximum of N_REP_CM_COMMAND times. If the Serving Radio Network Controller 40 receives the acknowledge message NBAP COMPRESSED MODE COMMAND Successful 90 from the NodeB, it sends the RRC MEASUREMENT CONTROL message 80.

Figure 6b represents the message flow for the CM_COMM_ABNORMAL_HANDLING=PHYCHANNEL RECONFIGURATION.

After the decision to deactivate the compressed mode, the Serving Radio Network Controller 40 sends the NBAP COMPRESSED MODE COMMAND 60 to the NodeB 20. At the same time, the Serving Radio Network Controller starts the CM_COMMAND_TIMER 100. If the Serving Radio Network Controller 40 does note receive the acknowledge message NBAP COMPRESSED MODE COMMAND Successful 90 before the expiry of CM_COMMAND_TIMER 100, the NBAP(RNSAP)RL_RECONFIGURATION/RRC PHYSICAL_CHANNEL_RECONFIGURATION procedure (140) is invoked.

Figure 6c represents the message flow for the CM_COMM_ABNORMAL_HANDLING=NO OPERATION.

After the decision to deactivate the compressed mode, the Serving Radio Network Controller 40 sends the NBAP COMPRESSED MODE COMMAND 60 to the NodeB 20. At the same time, the Serving Radio Network Controller starts the CM_COMMAND_TIMER 100. If the Serving Radio Network Controller 40 does note receive the acknowledge message NBAP COMPRESSED MODE COMMAND Successful 90 before the expiry of CM_COMMAND_TIMER 100, no further operation take place.

A basic advantage related to the arrangement described herein lies in providing an "Acknowledge" capability to the NBAP (RNSAP) COMPRESSED MODE COMMAND message while keeping its impact in terms of signalling low and fully backward compatible.

As indicated, in prior art arrangements (i.e. without any acknowledgement function) the deactivation procedure of the Compressed Mode, by means of NodeB Application Part (Radio Network Subsystem Application Part) messaging, may undesirably lead to failures due to unexpected loss of the COMPRESSED MODE COMMAND message.

The solution described herein, with its abnormal condition handling capability, is in a position to manage the Compressed Mode deactivation procedure with an improved reliability.

Consequently, without prejudice to the underlying principles of the invention, the details and the embodiments may vary, also appreciably, with reference to what has been described by way of example only, without departing from the scope of the invention as defined by the annexed claims.

## Claims

1. A method of deactivating a compressed mode of operation in a communication network, said method including at least one of a NBAP message exchange process (60) between a NodeB and a Radio Network Controller and an RNSAP message exchange process (70) between two Radio Network Controllers included in said network, the method including an acknowledgement phase of the messages (90, 95) exchanged during said message exchange process (60, 70).

2. The method of Claim 1, wherein said network includes a Serving Radio Network Controller (40), a NodeB (20), and a Drift Radio Network Controller (30), the method
**characterized in that** it includes the steps of:
- sending from said Serving Radio Network Controller (40) at least one of a NBAP COMPRESSED MODE COMMAND message (60) to the NodeB (20) and a RNSAP COMPRESSED MODE COMMAND message (70) to the Drift Radio Network Controller; and
- acknowledging said at least one of said NBAP COMPRESSED MODE COMMAND message (60) and said RNSAP COMPRESSED MODE COMMAND message (70).

3. The method of Claim 2, **characterized in that** it includes at least one of the steps of:
- sending a respective successful acknowledge message (90) from the NodeB (20) to said Serving Radio Network Controller (40) after the reception of said at least one of said NBAP COMPRESSED MODE COMMAND message (60), and
- sending a respective successful acknowledge message (95) from the Drift Radio Network Controller (30) to said Serving Radio Network Controller (40) after the reception of said at least one of said RNSAP COMPRESSED MODE COMMAND message (70).

4. The method of Claim 2, **characterized in that** it includes the step of:
- sending from said Serving Radio Network Controller (40) a RRC MEASUREMENT_CONTROL message (80) to a User Equipment (10), and
- acknowledging said RRC MEASUREMENT_CONTROL message by the User Equipment at the Radio Link Control (RLC) level.

5. The method of any of the previous claims, **characterized in that** it includes the step of including in said messages (60, 70) subject to said acknowledgement phase a Connection Frame Number (CFN) at which the said Compressed Mode is to be deactivated.

6. The method of Claim 2, **characterized in that** said step of acknowledging said at least one of said NBAP COMPRESSED MODE COMMAND message (60) and said RNSAP COMPRESSED MODE COMMAND message (70) includes the operation of using the Information Element (IE) "Transaction ID".

7. The method of Claim 2, **characterized in that** said step of acknowledging said at least one of said NBAP COMPRESSED MODE COMMAND message (60) and said RNSAP COMPRESSED MODE COMMAND message (70) includes the operations of:
- adding a compressed mode COMMAND TIMER (100) to said Serving Radio Network Controller (40),
- starting said compressed mode COMMAND TIMER (100) together with sending said at least one of said NBAP COMPRESSED MODE COMMAND message (60) and said RNSAP COMPRESSED MODE COMMAND message (70).
- sending a respective successful acknowledgement message (90) from the NodeB (20) to said Serving Radio Network Controller (40) after the reception of said NBAP COMPRESSED MODE COMMAND message (60) and a respective successful acknowledgement message (95) from the Serving Radio Network Controller (30) to said Serving Radio Network Controller (40) after the reception of said RNSAP COMPRESSED MODE COMMAND message (70).
- if said Serving Radio Network Controller (40) receives said acknowledgement message (90, 95) after the expiration of said compressed mode COMMAND TIMER (100), causing the repetition of said at least one of said NBAP COMPRESSED MODE COMMAND message (60) and said RNSAP COMPRESSED MODE COMMAND message (70).

8. The method of Claim 4 and Claim 7, **characterized in that**, if said Serving Radio Network Controller (40) receives said acknowledgement message (90, 95) before the expiration of said compressed mode COMMAND TIMER (100), the method includes the step of sending said RRC MEASUREMENT_CONTROL message (80) from said Serving Radio Network Controller (40) to said User Equipment (10).

9. The method of either of Claim 7 or Claim 8,
**characterized in that** it includes the step of setting the number of repetitions of said at least one of said NBAP COMPRESSED MODE COMMAND message (60) and said RNSAP COMPRESSED MODE COMMAND message (70) as a function of a parameter (N_REP_CM_COMMAND) configurable by said Radio Network Controller (40).

10. The method of any of Claims 7 to 9, **characterized in that** said compressed mode of operation is maintained if said compressed mode COMMAND_TIMER (100) has expired for a given number (N_REP_CM_COMMAND) times before receiving any said acknowledgement message (90, 95).

11. The method of any of the previous claims, wherein said compressed mode is activated as a result of a User Equipment (10) in a Third Generation (3G) mobile communication network being in the process of switching from Third Generation (3G) to Second Generation radio Transmission/Reception.

12. The method of any of the previous claims, wherein said compressed mode is activated for monitor the inter-frequency radio environment in a Third Generation (3G) cellular communication network in the process of seamless switching to inter-frequency Third Generation (3G) cells.

13. A communication system configured for performing the method of any of claims 1 to 12.

14. A communication network adapted to support a compressed mode of operation, said compressed mode adapted to be deactivated by means of a message exchange process (60) between a NodeB and a Radio Network Controller and by means of a message exchange process (70) between two Radio Network Controllers included in said network, the network being configured to implement the method of any of claims 1 to 12.

15. The network of Claim 14, **characterized in that** the network is a Third Generation (3G) mobile communication network configured to activate said compressed mode as a result of a User Equipment (10) in the network being in the process of switching from Third Generation (3G) to Second Generation radio Transmission/Reception.

16. The network of Claim 14, **characterized in that** the network is a Third Generation (3G) cellular communication network configured to activate said compressed mode for monitoring the inter-frequency radio environment in said cellular network in the process of seamless switching to inter-frequency Third Generation (3G) cells.

17. A computer program product, loadable in the memory of at least one computer and including software code portions for implementing the method of any of claims 1 to 12.
